# EUROPEAN PATENT APPLICATION

(11) **EP 4 390 484 A1**
(43) Date of publication of application: **26.06.2024**
(21) Application number: 22215441.1
(22) Date of filing: 21.12.2022
(51) Int. Cl.: G02B 6/27, G01J 4/04, G01J 3/02, G01J 3/28

(54) **A DEVICE AND A METHOD FOR POLARIZATION DEPENDENT IMAGING**

(71) Applicant: Imec VZW, 3001 Leuven (BE); Katholieke Universiteit Leuven KU Leuven Research & Development, 3000 Leuven (BE)
(72) Inventor: Ali, Farhan, 3000 Leuven (BE); Figeys, Bruno, 3020 Herent (BE); Gehlhaar, Robert, 3020 Herent (BE); Genoe, Jan, 3272 Testelt (BE)
(74) Representative: AWA Sweden AB

(57) **Abstract**

According to an aspect of the present inventive concept there is provided a device for polarization dependent imaging, comprising:
a detector comprising light sensitive elements;
a plurality of light propagating units, each comprising a polarization splitter having a receiving end for receiving incident light, and comprising a first and a second waveguide.

The first and second waveguides comprise a first and second portion of the receiving end. The first and second waveguides comprise a first and second distributing end, separate from each other. The polarization splitter is configured to propagate received light to the distributing ends. Each of the portions has an elongated shape such that propagation of light in the waveguides is dependent on the light's linear polarization. The elongated shapes are angled with respect to each other, such that the waveguides are configured to propagate different linear polarization directions.

Each light propagating unit is arranged such that light at the first and second distributing ends is output towards a first and second light sensitive element, respectively.

## Description

### Technical field

The present description relates to polarimetric imaging, and more specifically to a device and a method for polarization dependent imaging.

### Background

Imaging techniques using detection of several different properties of light, such as different types of polarizations and/or different wavelengths, have found widespread application ranging from polarimetric detection enabling 3D sensing and improved object identification, as well as multi-spectral detection for scientific measurements to photographic imaging. In order to distinguish between light of different properties, imaging devices such as digital cameras typically comprise filter arrays covering the pixels. For polarimetric imaging, the filter arrays may comprise sets of different polarization filters to filter out certain polarization types, such that different pixels on the imaging device detect light intensity within different types of polarization. The acquired signals from the different pixels may be used to represent the intensity of the respective polarization types, and based on the measured intensities the polarization content of the incident light may be determined. Similarly, for multi-spectral imaging, the filter arrays may comprise sets of color filters. A common example is cameras for photography comprising filter arrays for the colors red, green, and blue, allowing the three separate colors to be detected by respective pixels of the imaging detector.

However, conventional filters reduce the intensity of the incident light before it reaches the detector, thereby effectively reducing the sensitivity of the imaging device. For example, conventional polarization filters may discard more than 50% of the incident light.

On the other hand, detector development is driven towards obtaining higher resolution images, and thus towards smaller pixel size. With decreasing pixel size, it is growing increasingly difficult to obtain good image quality, especially at low light conditions.

Hence, there is a need in the art for further improvements related to light sensitivity and thus to downscaling of imaging devices related to polarimetric imaging.

### Summary

An objective of the present description is to mitigate, alleviate or eliminate one or more of the above-identified deficiencies in the art and disadvantages singly or in any combination. These and other objectives are at least partly met by the invention as defined in the independent claims. Preferred embodiments are set out in the dependent claims.

According to a first aspect, there is provided a device for polarization dependent imaging, the device comprising:
a detector comprising a plurality of light sensitive elements, wherein each light sensitive element is configured to generate an electric signal dependent on an intensity of light incident onto the light sensitive element;
a plurality of light propagating units, wherein each light propagating unit of the plurality of light propagating units comprises:
   a polarization splitter having a receiving end configured to receive light incident onto the receiving end, and wherein the polarization splitter further comprises a first waveguide and a second waveguide, wherein the first waveguide comprises a first portion of the receiving end and the second waveguide comprises a second portion of the receiving end, wherein the first waveguide comprises a first distributing end and the second waveguide comprises a second distributing end, the first distributing end and the second distributing end being separate from each other, and wherein the polarization splitter is configured to propagate the light from the receiving end to the first and second distributing ends, wherein each of the first portion and the second portion has an elongated shape such that propagation of light into the first waveguide and the second waveguide, respectively, is dependent on a linear polarization direction of the light, wherein the elongated shape of the first portion and the elongated shape of the second portion are angled with respect to each other, such that the first waveguide and the second waveguide are configured to propagate different linear polarization directions of the light;
   wherein, for each light propagating unit, the light propagating unit is arranged with respect to the detector such that the light at the first distributing end and the second distributing end is output towards a first and a second light sensitive element, respectively, of the plurality of light sensitive elements.

By the term "polarization dependent imaging" is here meant detection of light such that for each of a plurality of spatial positions on an imaged object, information related to the polarization of the light from the corresponding spatial position is detected.

In this context the term "light" should be allowed a broad interpretation, not limited to visible electromagnetic radiation. Rather, the term "light" may also include for example ultraviolet light, infrared light, or combinations thereof.

By the term "light sensitive element" is here meant an element reacting to light impinging onto the element, by generating an electric signal as a response to the light intensity. A plurality of light sensitive elements may be arranged on a detector, configured to allow read-out of the electric signals representing light for image acquisition. Given as non-limiting examples, light sensitive elements may be found on photodiodes, photo-multiplier tubes (PMT), and pixels on image detectors such as charge-coupled devices (CCD) and complementary metal oxide semiconductors (CMOS). By way of example, a plurality of light sensitive elements may be in the form of pixels on a CCD or CMOS detector, but may alternatively comprise a plurality of any other type of light sensitive elements.

By way of example, the plurality of light sensitive elements may be arranged in a plane of the detector, wherein the plane is a planar surface of the detector.

According to an embodiment, the plurality of light sensitive elements is arranged in an array forming an array of light sensitive elements. Thus, the plurality of light sensitive elements may be arranged in a regular manner. This may facilitate manufacturing of the detector.

By way of example, the light sensitive elements may be arranged in rows and columns forming the array of light sensitive elements.

Typically, a light sensitive element is in the shape of a square, however it is conceivable that the light sensitive element may alternatively be of another shape, such as a rectangular, circular, or elliptical shape.

However, it should be realized that the plurality of light sensitive elements need not be arranged in a regular manner and that different light sensitive elements may have different sizes and/or shapes.

By the term "light propagating unit" is here meant any unit, device, and/or element with the capability of propagating light based on the polarization of the light. Given only as an example, incident light of several different types of linear polarizations may be split up into different paths inside the light propagating unit depending on the linear polarization directions of the light.

The light propagation unit may be composed of an optical material having a high refractive index. Given as non-limiting examples, the light propagation unit may be composed of TiO₂ or SiN embedded in SiO₂.

The light propagating unit comprises a polarization splitter having a receiving end configured to receive light incident onto the receiving end. The receiving end forms a planar surface of the polarization splitter. The light is typically incident substantially perpendicularly to the planar surface of the receiving end. The receiving end comprises a first portion and a second portion, being respective ends of the first waveguide and the second waveguide. The first portion and the second portion each has an elongated shape extending in a plane of the planar surface. Thus, the elongated shape of the first and the second portions respectively typically extend substantially perpendicularly to the direction of propagation of the light.

If the plurality of light sensitive elements is arranged in a plane of the detector, wherein the plane is a planar surface of the detector, the receiving end may extend in a plane parallel to the plane of the detector. The plane of the detector may be perpendicular to the direction of propagation of the light in the light propagating unit.

The elongated shape of the first portion and the elongated shape of the second portion are angled with respect to each other, within the plane of the planar surface of the receiving end. The orientation of the elongated shape of the first and second portions of the receiving end, respectively, and thus the orientation of the respective waveguides, determines what linear polarization direction of the light that will propagate through the respective waveguide. Thus, as a result of the first and second portions being angled with respect to each other, the first waveguide and the second waveguide are configured to propagate different linear polarization directions of the light.

At the receiving end, the first and second waveguides extend in the plane of the planar surface of the receiving end, typically being perpendicular to the direction of propagation of the light. Further, each of the first and second waveguide also extends from the receiving end, in a direction perpendicular to the plane of the planar surface of the receiving end, towards the distributing end of the respective waveguide. Typically, such a direction is the same direction as the direction of propagation of light in the respective waveguide. By the present arrangement, different linear polarization directions may be propagating in the first waveguide and the second waveguide, respectively. Thus, different linear polarization directions may therefore reach the first and second distributing ends, respectively.

The first waveguide and the second waveguide have a height from the receiving end to the distributing end, respectively. The height of the first and second waveguides may depend on the material out of which the first and second waveguides are made. More specifically, the height may depend on the refractive index of the material. By way of example, if the first and second waveguides are made of SiN, the height may be about 11 µm. If the first and second waveguides are made of a material with higher refractive index, the height may be smaller.

Since the light propagating unit is arranged with respect to the detector such that the light at the first distributing end and the second distributing end is output towards a first and a second light sensitive element, respectively, the first and second light sensitive elements are enabled to detect light of different linear polarization directions. In the manner described above an imaging device being able to distinguish between at least two linear polarization directions of the light, may be provided.

It should be realized that propagation of light into the first waveguide and the second waveguide, respectively, being dependent on a linear polarization direction of the light does not necessarily mean that only light of a particular linear polarization may be propagated through the first waveguide and the second waveguide, respectively. However, the first and the second waveguide may be substantially selective to a respective particular linear polarization such that a distribution between light of different linear polarization directions is different for light at the first distributing end and light at the second distributing end.

It should be understood that the first waveguide and the second waveguide may not necessarily be completely separate from each other. By way of example, the first waveguide and the second waveguide may be physically connected to form an integral polarization splitter. More specifically, the first waveguide and the second waveguide may partly coincide such that a portion of the polarization splitter forms part of the first waveguide as well as the second waveguide. By way of example, the first portion of the receiving end may partly coincide with the second portion of the receiving end.

An advantage with the device of the first aspect is that a device for polarization dependent, or polarimetric, imaging may be provided without using conventional polarization filters. By using polarization filters a relatively large portion of the collected light may be discarded, since only a specific polarization will be transmitted. By the device of the first aspect, most, or preferably all of the collected light may reach the detector, since light is not filtered out of the optical path, but rather redistributed and/or split into different paths based on polarization. Thus, a device with a higher detection efficiency and improved performance also at low light conditions may be provided.

According to an embodiment, each of the first waveguide and the second waveguide has a tapered shape, respectively, such that a cross-section of the first portion and the second portion is larger than a cross-section of the first distributing end and the second distributing end, respectively.

By the term "tapered shape" is here meant that the cross-section of the first and second waveguides may gradually, continuously or step-wise transition from the larger cross-section of the first and second portions, respectively, to the smaller cross-section of the first and second distributing ends, respectively, along the direction of propagation of light in the respective waveguide.

The waveguides may comprise a plurality of side walls extending from the respective portion of the receiving end to the respective distributing end. By way of example, a waveguide may comprise three, four, five or six sidewalls. A tapered shape of a waveguide may be provided by tilting or angling one or more of the side walls with respect to the direction of propagation of the light in the waveguide. It is conceivable that the waveguide may be tapered from more than one sidewall, such that more than one sidewall of the waveguide is tilted or angled with respect to the main propagation direction of the light. For example, the waveguide may be symmetrically tapered such that two opposing sidewalls are equally tilted or angled with respect to the main propagation direction of the light. It is equally conceivable that the waveguide may be tapered from one sidewall, such that the one sidewall of the waveguide is tilted or angled with respect to the main direction of propagation of the light.

According to an embodiment, the elongated shape of the first portion and the elongated shape of the second portion are angled by 90° with respect to each other.

It should be understood that, although this is a preferred embodiment, the present description is not limited to the elongated shapes of the first and second portions being angled by 90°. By way of example, the elongated shapes of the first and second portions may be angled in the interval of 60° to 110°. Within this interval the light propagating unit may provide a good transmission efficiency.

An advantage with this embodiment is that a 90-degree angle between the elongated shapes of the first and second portions may provide better separation between the two polarization directions. By the present arrangement, a device for polarization dependent imaging that may better distinguish between different polarization directions of light may be provided.

According to an embodiment, a cross-section of the polarization splitter at the receiving end is in the shape of an L, such that the elongated shape of the first portion and the elongated shape of the second portion emanate from a common position and extend perpendicularly to each other.

For an L shaped receiving end, the elongated shape of the first portion and the elongated shape of the second portion may be of equal lengths. Alternatively, for an L shaped receiving end the elongated shape of the first portion and the elongated shape of the second portion may be of different lengths.

It should be understood that the cross-section of the polarization splitter at the receiving end is not limited to being in the shape of an L. Given as non-limiting examples, the cross-section of the polarization splitter at the receiving end may be in the shape of a T or an X.

According to an embodiment, each of the first portion and the second portion has an elongated shape in the shape of a rectangle.

Given as a non-limiting example, the first portion and the second portion may have a length in the range of 650 nm to 800 nm. Given as another non-limiting example, the first portion and the second portion may have a width in the range of 200 nm to 250 nm.

Further, given as a non-limiting example, the first distributing end and the second distributing end may have a length in the range of 200 nm to 250 nm. Given as another non-limiting example, the first distributing end and the second distributing end may have a width in the range of 200 nm to 250 nm.

According to an embodiment, each light propagating unit further comprises a funnel element having a collecting end and a transmitting end, wherein a cross-section of the collecting end is larger than a cross-section of the transmitting end, and wherein the funnel element is configured to collect light incident at the collecting end, to propagate the light to the transmitting end, and to transmit the light from the transmitting end to the receiving end of the polarization splitter.

In order for the collecting end to collect as much light as possible, typically the cross-section of the collecting end is large. The funnel element may be tapered such that the cross-section of the collecting end is larger than the cross-section of the transmitting end. By way of example, the funnel element may be tapered such that the light may be confined to a small area at the transmitting end having a size in the same order of magnitude as the wavelength of the light. Given as a non-limiting example, the cross-section of the collecting end may have the dimensions in the range of 650 nm x 650 nm to 800 nm x 800 nm. Given as another non-limiting example, the cross-section of the transmitting end may have the dimensions in the range of 200 nm x 200 nm to 250 nm x 250 nm.

It should be understood that most of the light, and preferably all the light, collected at the collecting end of the funnel element may be propagated to the transmitting end and coupled into the polarization splitter via the receiving end.

It should be understood that the funnel element is not limited to having the shape of a cone. By way of example, the funnel element may have the shape of a pyramid. By way of further example, the funnel element may be skewed and/or asymmetric with respect to the main propagation direction of the funnel element. Further, the funnel element may have the same geometric shape at the collecting end and the transmitting end. However, the funnel element is not limited to having the same geometric shape at collecting end and transmitting end. The funnel element may alternatively be structured such that the shape of the cross-section of the collecting end is different from the shape of the cross-section of the transmitting end.

The transmitting end of the funnel element may be in physical contact with the receiving end of the polarization splitter. The funnel element and the polarization splitter may be configured such that the transmitting end of the funnel element transitions into the receiving end of the polarization splitter. Physical contact between the transmitting end and the receiving end may improve the efficiency of light coupling from the funnel element to the polarization splitter. However, it is conceivable that, according to some embodiments, a layer may be arranged between the transmitting end and the receiving end, thereby improving coupling of light from the funnel element to the polarization splitter.

It should be understood that the funnel element may be a separate element from the polarization splitter, such that the funnel element and the polarization splitter form two separate elements of the light propagating unit. However, it is equally conceivable that the funnel element is integrally formed with the polarization splitter such that they form separate portions of an integral light propagating unit.

An advantage with this embodiment is that by using the combination of the funnel element and the polarization splitter, the amount of collected light may be increased, and thus light losses may be reduced. This may in turn increase sensitivity of the device, and improved quality of the detected data may be provided.

According to an embodiment, the funnel element is further shaped so as to propagate the light in dependence of the linear polarization direction of the light, such that a spatial distribution of the light at different locations of the transmitting end is dependent on the linear polarization of the light.

The funnel element may be shaped so as to propagate the light in dependence of the linear polarization direction of the light, such that different linear polarization directions are transmitted into the first portion of the receiving end and the second portion of the receiving end, respectively.

By way of example, a funnel element being structured such that the shape of the cross-section is different at different positions along the direction of propagation of light in the funnel element, may propagate the light in dependence of the linear polarization direction of the light.

An advantage with this embodiment is that an improved coupling of the respective polarization directions of light from the funnel element into the first and second waveguides, respectively, may be provided.

According to an embodiment, the funnel element is structured such that a shape of the cross-section of the collecting end is different from a shape of the cross-section of the transmitting end.

It should be understood that the shape of the cross-section of the funnel element may gradually, continuously or step-wise transition from the shape of the cross-section of the collecting end to the shape of the cross-section of the transmitting end, along the direction of propagation of light in the funnel element.

According to an embodiment, the shape of the cross-section of the collecting end is in the shape of a square, and the shape of the cross-section of the transmitting end is in the shape of an L.

According to an embodiment, the shape and a size of the cross-section of the transmitting end of the funnel element matches a shape and a size of the cross-section of the receiving end of the polarization splitter, and wherein the funnel element is arranged such that the cross-section of the transmitting end coincides with the cross-section of the receiving end.

By the term "coincide" is here meant that the cross-section of the transmitting end and the cross-section of the receiving end have the same size, shape and orientation, and meet in physical contact with each other.

It should be understood that the shape of the cross-section of the funnel element may gradually, continuously or step-wise transition from the shape of the cross-section of the collecting end to the shape of the cross-section of the transmitting end, along the direction of propagation of light in the funnel element, wherein the shape and size of the cross-section of the transmitting end matches a shape and a size of the cross-section of the receiving end of the polarization splitter. It is conceivable that, if the transmitting end meets the receiving end in physical contact or if the transmitting end and the receiving end are interconnected, the gradual, continuous or step-wise transition may continue from the receiving end to the distributing ends of the polarization splitter, such that the light propagating unit may gradually, continuously or step-wise transition from the shape of the cross-section of the collecting end, via the shape of the cross-section of the transmitting end, to the shape of the cross-section of the distributing ends.

An advantage with this embodiment is that an improved coupling of the respective polarization directions of light from the funnel element into the first and second waveguides, respectively, may be provided.

According to an embodiment, the light sensitive elements are arranged in a planar fashion in a detector plane, and
wherein at least some of the light propagating units are arranged with an orientation in an interval of 40°-50° in a plane parallel to the detector plane, with respect to an orientation of adjacent light propagating units.

As discussed in the present disclosure, the device for polarization dependent imaging is able to distinguish between two linear polarization directions of the light. By way of example, if the elongated shape of the first portion and the elongated shape of the second portion are angled by 90° with respect to each other, a device for polarization dependent imaging may be provided that better distinguishes between two perpendicular polarization directions of light, for example horizontally and vertically polarized light. In other words, light of one of the two polarization directions, e.g. horizontally (0°) polarized light, may propagate substantially exclusively through the first waveguide, whereas light of the other of the two polarization directions, e.g. vertically (90°) polarized light, may propagate substantially exclusively through the second waveguide. Consequently, horizontally and vertically polarized light will be directed towards, and thus detected by, two separate light sensitive elements, namely the first and the second light sensitive element, respectively.

It should be understood that light with a polarization direction with an orientation of 45° with respect to the horizontal direction will comprise components of both horizontally and vertically polarized light, and may be split up into both the first and the second waveguide and may be detected by both the first and the second light sensitive element. However, the same split will result from light having a polarization direction with an orientation of 135° with respect to the horizontally polarized light. These two polarization directions, i.e. 45° and 135°, may be referred to as diagonal polarization directions. Thus, if all light propagating units are arranged with the same orientation, the device for polarization dependent imaging may not be able to distinguish between light of the two diagonal polarization directions.

However, by arranging at least some of the light propagating units with an orientation in an interval of 40°-50°, as for example 45°, in a plane parallel to the detector plane, with respect to an orientation of adjacent light propagating units, a device for polarization dependent imaging that may distinguish between light polarized in all the above-mentioned polarization directions, i.e. 0°, 45°, 90°, and 135°. More specifically, the light propagating units with an orientation of about 45°, may distinguish between light polarized in the directions 45° and 135°, whereas the other light propagating units may distinguish between light polarized in the directions 0° and 90°.

The present arrangement may enable determining the polarization angle of incident light having any linear polarization, thus within the full range between 0° and 180°. Light having an arbitrary linear polarization may thus be split up into two perpendicular polarization components in each light propagating unit, and may result in different light intensities onto the respective light sensitive elements. From the light intensity detected at 0°, 45°, 90°, and 135°, the angle of the linearly polarized incident light may be determined.

An advantage with this embodiment is thus that a device for polarization dependent imaging with a further improved capability of distinguishing between light of different polarization directions may be provided.

According to an embodiment, the light sensitive elements are arranged in a planar fashion in a detector plane, and
wherein the device further comprises a plurality of half-wave plates, HWP, arranged at the receiving ends of the light propagating units, wherein each HWP of the plurality of HWP is configured to shift a phase of two perpendicular polarization directions of the light, and
wherein at least some of the HWP are arranged with an orientation in an interval of 20°-25° in a plane parallel to the detector plane, with respect to an orientation of adjacent HWP.

The HWP comprises two principal axes, a fast and a slow axis. Light propagating through the HWP with a polarization direction along the fast axis may propagate faster than light with a polarization direction along the slow axis. Light incident onto the HWP with a linear polarization at an angle θ with respect to the fast axis will be split up into two perpendicular polarization components along the fast and slow axis, respectively. Due to the difference in propagation speed, a phase difference between the two perpendicular polarization directions will result as the light exits the HWP. As a result of the phase shift, the polarization direction of the light exiting the HWP will have turned an angle of 2θ with respect to the incident polarization direction.

By arranging some of the HWP with an orientation in an interval of 20°-25°, as for example 22.5°, in a plane parallel to the detector plane, with respect to an orientation of adjacent HWP, the polarization direction of light exiting such HWP may be 2 x 22.5° = 45° with respect to the polarization direction of light exiting the other HWP. In other words, arranging at least some of the HWP with an orientation in an interval of 20°-25°, may provide a similar effect as arranging at least some of the light propagating units with an orientation in an interval of 40°-50°. Thus, by the present arrangement a device for polarization dependent imaging that may distinguish between light polarized in all the above-mentioned polarization directions, i.e. 0°, 45°, 90°, and 135°, may be provided.

An advantage with this embodiment is thus that a device for polarization dependent imaging with a further improved capability of distinguishing between light of different polarization directions may be provided.

According to an embodiment, each light propagating unit further comprises at least one color splitter,
wherein the at least one color splitter is arranged such that the light being propagated through the first waveguide and/or the second waveguide is also propagated through the at least one color splitter, and
wherein each color splitter of the at least one color splitter is configured to propagate light through the color splitter in dependence of wavelength, such that a distribution of the light directed towards the light sensitive elements is dependent on polarization and wavelength of the light.

By the term "color splitter" is here meant any unit, device, and/or element with the capability of splitting light based on the wavelength of the light. Given only as an example, incident light of several wavelengths may be separated by having a direction of propagation altered based on the wavelength of the light, such that different wavelengths take different directions. For example, the color splitter may split light into a number of wavelength bands. Thus, the different wavelength bands may be distributed across a direction of extension of the color splitter. By way of example, the color splitter may comprise, but are not limited to, waveguides, prisms, and/or gratings. By way of further example, the color splitter may be of the type described in patent application EP3770660 A1.

Another advantage with this embodiment is that a device for polarization dependent imaging which is further configured for multispectral/hyperspectral imaging may be provided without using conventional absorbing color filters. By using color filters, a relatively large portion of the collected light may be discarded, since only a specific wavelength band will be transmitted. By the present embodiment, most, or preferably all of the collected light may reach the detector, since light is not filtered out of the optical path, but rather redistributed and/or split into different paths based on wavelength and polarization.

According to an embodiment, for each light propagation unit, the first and second waveguides and the detector are arranged on opposite sides of the color splitter.

By the present arrangement, the light propagating through a specific color splitter has propagated through a specific waveguide prior to reaching the color splitter. Thus, the light propagating through a specific color splitter has been distributed in dependance of polarization already prior to reaching the color splitter, and may therefore represent a specific polarization direction.

For each color splitter, the color splitter may split light into a number of wavelength bands distributed across a direction of extension of the color splitter. In other words, the light exiting the color splitter may be distributed such that light in different wavelength bands exits the color splitter at different locations of the color splitter. The color splitter may be arranged such that light at different wavelength bands are directed towards different light sensitive elements. In the manner described above, a device for polarization dependent imaging as well as wavelength dependent imaging may be provided.

Manufacturing of the plurality of light propagating units may be provided by successive thin film deposition, such as epitaxial deposition, physical vapor deposition, chemical vapor deposition, physical layer deposition, or atomic layer deposition, and etching technology. By way of example, manufacturing of the plurality of light propagating units may involve advanced lithography.

By thin film deposition a layer of an ambient material may be provided. Etching technology may be used to remove segments of the layer to form spaces in the layer at the intended location of the light propagating unit. By way of example, the ambient material may be, but is not limited to, SiO₂. Once the etching of the structures is completed the spaces may be filled with a high refractive index material. Given as non-limiting examples, the high refractive index material may be TiO₂, Si₃N₄, HfO₂, or Ta₂O₅. The manufacturing procedure may be repeated multiple times providing multiple layers, wherein the cross-section of each light propagating unit may be changed step by step for each new layer. In the manner described above, the different cross-sections of the light propagating unit may be formed by the different layers.

As such, the tapered shapes of the cross-section of the light propagating unit may be built up layer by layer to gradually, continuously or step-wise transition between the different cross-sectional shapes of the light propagating unit, along the direction of propagation of light.

The layers forming the light propagating unit comprising tapered shapes, such as the polarization splitter and/or the funnel element, may preferably be made to have a thickness not being too large. Thick layers may result in stress in the layers, and/or may suffer from deposition problems during manufacturing or errors in alignment between the elements of the light propagating units. By way of example, the layers may have a thickness of 2 µm, 3 µm, or 4 µm.

It serves to mention that the transmission efficiency of the light propagating unit may increase by an increasing number of layers. A reason for the increased efficiency with an increasing number of layers is because the waveguides can be made to adopt a shape that sufficiently fulfills the desired/optimal shape of the waveguides. By way of example, a light propagating unit manufactured by lithography providing 5 layers or more may present a transmission efficiency of 50% or higher. By way of further example, a light propagating unit manufactured by lithography providing 9 layers or more may present a transmission efficiency of 70% or higher.

According to a second aspect, there is provided a method for polarization dependent imaging, the method comprising:
receiving, at a receiving end of a polarization splitter of each light propagating unit of a plurality of light propagating units, light incident onto the receiving end, wherein the polarization splitter further comprises a first waveguide and a second waveguide, wherein the first waveguide comprises a first portion of the receiving end and the second waveguide comprises a second portion of the receiving end, wherein the first waveguide comprises a first distributing end and the second waveguide comprises a second distributing end, the first distributing end and the second distributing end being separate from each other;
propagating, for each light propagation unit, the light from the receiving end to the first and second distributing ends, wherein each of the first portion and the second portion has an elongated shape such that propagation of light into the first waveguide and the second waveguide, respectively, is dependent on a linear polarization direction of the light, and wherein the elongated shape of the first portion and the elongated shape of the second portion are angled with respect to each other, such that propagating the light through the first waveguide and the second waveguide further comprises propagating different linear polarization directions of the light;
outputting, for each light propagating unit, the light at the first distributing end and the second distributing end towards a first and a second light sensitive element, respectively, of a plurality of light sensitive elements, such that each light sensitive element generates an electric signal dependent on an intensity of light incident onto the light sensitive element.

According to an embodiment, the method further comprises:
collecting, by the plurality of light propagating units, light incident at a collecting end of a respective funnel element of each light propagating unit of the plurality of light propagating units;
propagating, for each light propagation unit, the light to a transmitting end of the funnel element; and
transmitting the light from the transmitting end to the receiving end of the polarization splitter;
wherein a cross-section of the collecting end is larger than a cross-section of the transmitting end.

Effects and features of the second aspect are largely analogous to those described above in connection with the first aspect. Embodiments mentioned in relation to the first aspect are largely compatible with the second aspect. It is further noted that the inventive concepts relate to all possible combinations of features unless explicitly stated otherwise.

Other objectives, features and advantages of the present inventive concept will appear from the following detailed disclosure, from the attached claims as well as from the drawings.

### Brief descriptions of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1A schematically illustrates a device for polarization dependent imaging, comprising a plurality of light propagating units each having a funnel element and a polarization splitter having gradually, continuously tapered shapes.
Fig. 1B schematically illustrated cross-sectional shapes of the light propagating unit at different locations.
Fig. 1C schematically illustrates an alternative structure of the polarization splitter having step-wise tapered shapes.
Fig. 2 schematically illustrates a device for polarization dependent imaging, comprising a plurality of light propagating units having an alternative structure of the funnel element.
Fig. 3 illustrates a set of examples of light intensity distributions detected by a sub-array of light sensitive elements, for incident light with known polarization content.
Fig. 4A schematically illustrates a top view of an alternative variation of the device for polarization dependent imaging, wherein the light propagating units are arranged with alternating orientation.
Fig. 4B schematically illustrates a top view of a device for polarization dependent imaging, comprising half-wave plates arranged with alternating orientation.
Fig. 4C schematically illustrates a perspective view and a top view of a possible design of a half-wave plate.
Fig. 5 illustrates a set of examples of light intensity distributions detected by a sub-array of light sensitive elements, for incident light with known polarization content, for the device comprising alternatingly oriented half-wave plates.
Fig. 6A schematically illustrates a device for polarization dependent imaging, comprising color splitters.
Fig. 6B illustrates a set of examples of light intensity distributions detected by a sub-array of light sensitive elements, for incident light with known polarization and wavelength content, for a device comprising a combination of color splitters and alternatingly oriented half-wave plates.
Fig. 7 illustrates a schematic block diagram shortly summarizing the method for polarization dependent imaging.

### Detailed description

In cooperation with attached drawings, the technical contents and detailed description of the present inventive concept are described thereinafter according to a preferable embodiment, being not used to limit the claimed scope. This inventive concept may be embodied in many different forms and should not be construed as limited to the embodiments set forth herein; rather, these embodiments are provided for thoroughness and completeness, and fully convey the scope of the inventive concept to the skilled person.

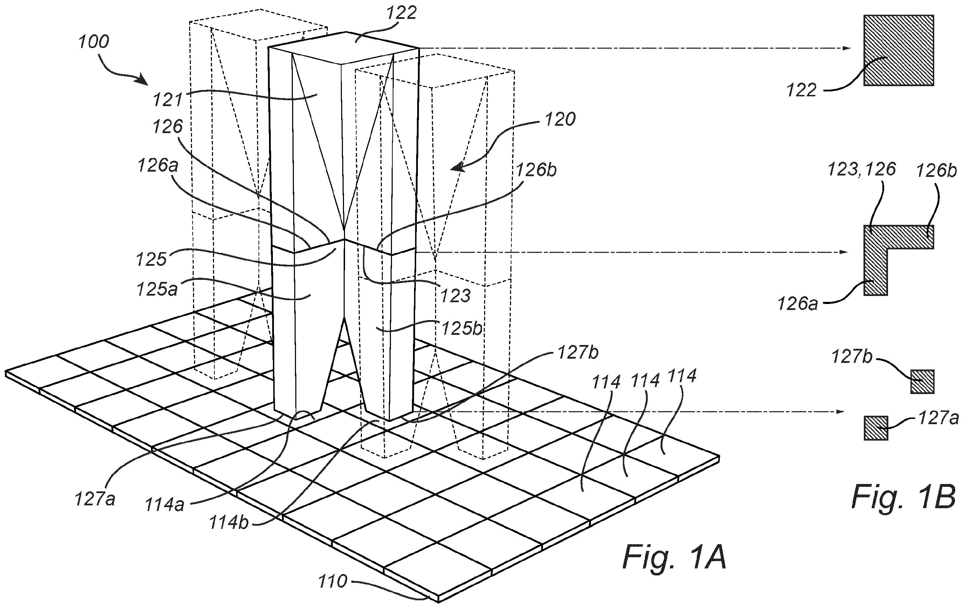

Fig. 1A schematically illustrates a device 100 for polarization dependent imaging.

The device 100 comprises a plurality of light propagating units 120. Each respective light propagating unit 120 of the device 100 comprises a funnel element 121 having a collecting end 122 and an opposite transmitting end 123. The collecting ends 122 of the plurality of light propagating units 120 are arranged adjacent to each other leaving only small gaps, or no gaps, in between the different collecting ends 122. The collecting ends 122 are here illustrated to be arranged in perpendicular rows and columns such that the collecting ends 122 together form a planar surface. However, it is conceivable that the collecting ends 122 may be arranged in alternative manners.

Each respective funnel element 121 is configured to collect light incident at the collecting end 122. The light may come from an object being imaged by a lens (not shown here) onto the planar surface of collecting ends 122, however also other arrangements directing light onto the collecting ends 122 are conceivable.

The funnel element 121 is further configured to propagate the light from the collecting end 122 to the transmitting end 123. The funnel element 121 is tapered in at least some directions such that the cross-section of the collecting end 122 is larger than the cross-section of the transmitting end 123. As illustrated in Fig. 1B, the funnel element 121 is structured such that the shape of the cross-section of the collecting end 122 is in the shape of a square, and the shape of the cross-section of the transmitting end 123 is in the shape of an L having two elongated portions of equal length. It should be understood, however, that the collecting end 122 and the transmitting end 123, respectively, are not limited to having the cross-sectional shapes illustrated here, but may alternatively have other shapes.

Each respective light propagating unit 120 of the device 100 comprises a polarization splitter 125 having a receiving end 126. The polarization splitter 125 is arranged such that the receiving end 126 is facing the transmitting end 123 of the funnel element 121. The polarization splitter 125 may be arranged such that the receiving end 126 is in direct contact with the transmitting end 123 of the funnel element 121. Alternatively, the polarization splitter 125 may be arranged such that a gap is formed between the receiving end 126 and the transmitting end 123.

The funnel element 121 is configured to transmit the light from the transmitting end 123 to the receiving end 126 of the polarization splitter 125. The polarization splitter 125 is configured to receive light incident onto the receiving end 126. Most of the light, and preferably all the light, collected at the collecting end 122 of the funnel element 121 may be propagated to the transmitting end 123 and coupled into the polarization splitter 125 via the receiving end 126. Optionally, one or more additional layers may be provided between transmitting end 123 and the receiving end 126. The one or more additional layers may enhance the coupling of light between the funnel element 121 and the polarization splitter 125.

The polarization splitter 125 further comprises a first waveguide 125a and a second waveguide 125b. The first waveguide 125a comprises a first portion 126a of the receiving end 126 and the second waveguide 125b comprises a second portion 126b of the receiving end 126.

The first portion 126a and the second portion 126b respectively has an elongated shape extending in a plane perpendicular to the direction of propagation of light. The first portion 126a and the second portion 126b form a planar surface of the receiving end 126 in the plane. The direction in which the elongated shape extends in the plane may determine what linear polarization direction of the light will be promoted to propagate into the respective waveguide 125a, 125b. Further, the elongated shape of the first portion 126a and the elongated shape of the second portion 126b are angled with respect to each other. Thus, different linear polarization directions of the light are promoted to propagate through the first waveguide 125a and the second waveguide 125b, respectively.

The elongated shape of the first portion 126a and the elongated shape of the second portion 126b may be angled by 90° with respect to each other, as illustrated in Fig. 1A. The cross-section of the polarization splitter 125 at the receiving end 126 may be in the shape of an L, such that the elongated shape of the first portion 126a and the elongated shape of the second portion 126b emanate from a common position and extend perpendicularly to each other. The first portion 126a and the second portion 126b may be of equal length. By the present arrangement, two perpendicular linear polarization directions of the light are promoted to propagate through the first waveguide 125a and the second waveguide 125b, respectively. It should be understood, however, that the receiving end 126 is not limited to having the cross-sectional shape illustrated here, but may alternatively have other shapes.

The first portion 126a and the second portion 126b may have an elongated shape in the shape of a rectangle, respectively. However, it should be understood that the first and second portions 126a, 126b are not limited to having a rectangular cross-section. By way of example, the cross-sections may be in the shape of an ellipse.

As illustrated in Fig. 1A, the shape and size of the cross-section of the transmitting end 123 of the funnel element 121 may match the shape and size of the cross-section of the receiving end 126 of the polarization splitter 125. Further, the funnel element 121 may be arranged such that the cross-section of the transmitting end 123 coincides with the cross-section of the receiving end 126. The present arrangement may improve coupling of light from the funnel element 121 into the polarization splitter 125.

It serves to mention that the funnel element 121 in the present arrangement may be further shaped so as to propagate the light in dependence of the linear polarization direction of the light, such that different linear polarization directions are transmitted into the first portion 126a and the second portion 126b, respectively. In this manner, polarization splitting and transmission efficiency may be further improved.

Although the device 100 is here illustrated as comprising a plurality of light propagating units 120, each of which comprising a funnel element 121, it should be understood that the device 100 is not limited to having funnel elements 121. Alternatively, the light propagating units 120 may lack funnel elements 121. It is conceivable that the incident light may then be incident onto the receiving end 126 of the polarization splitter without first having been collected by a funnel element 121. However, by using a funnel element 121, light may be more efficiently collected into the polarization splitter 125.

The first waveguide 125a and the second waveguide 125b each extends from the receiving end 126, in a direction perpendicular to the plane of the planar surface of the receiving end 126, to a first distributing end 127a and a second distributing end 127b, respectively.

The first distributing end 127a and the second distributing end 127b are separate from each other. As illustrated in Fig. 1A, each of the first waveguide 125a and the second waveguide 125b may have a tapered shape, such that the cross-section of the first portion 126a and the second portion 126b is larger than a cross-section of the first distributing end 127a and the second distributing end 127b, respectively. The corresponding cross-sections of the distributing ends 127a, 127b are illustrated in Fig. 1B.

It is conceivable, however, that the waveguides 125a, 125b are not limited to having a tapered shape. By way of example, the waveguides 125a, 125b may extend from the receiving end 126 at an angle not being perpendicular to the plane of the receiving end 126 such that the distance between the waveguides 125a, 125b increases with increasing distance from the receiving end 126 towards the distributing ends 127a, 127b. In such an arrangement, the distributing ends 127a, 127b may also be separate from each other.

The polarization splitter 125 is configured to propagate the light from the receiving end 126 to the first and second distributing ends 127a, 127b. Since the first waveguide 125a and the second waveguide 125b are configured to propagate two different, perpendicular, linear polarization directions of the light, the light at the first distributing end 127a and the second distributing end 127b may have different polarization directions.

It serves to mention that, although the light propagating unit is illustrated in Fig. 1A as having outer edges of the transmitting end 123 of the funnel element 121 being parallel with the outer edges of the receiving end 126 of the polarization splitter 125, the present description is not limited to such parallel edges. Alternatively, the funnel element 121 and the polarization splitter 125 may be angled with respect to each other, in the plane of the receiving end 126. Such an angle may be provided by a rotation of the funnel element with respect to the polarization splitter, about an axis perpendicular to the detector plane. An angle between the funnel element 121 and the polarization splitter 126 in the interval of ±20° may provide a good light splitting efficiency.

The device 100 further comprises a detector 110 comprising a plurality of light sensitive elements 114. The light sensitive elements 114 are arranged in a planar fashion in a plane of the detector 110. Although the light sensitive elements 114 are here illustrated to be arranged in perpendicular rows and columns of an array, it is conceivable that the light sensitive elements 114 may alternatively be arranged in other manners.

Each light propagating unit 120 is arranged with respect to the detector 110 such that the light at the first distributing end 127a and the second distributing end 127b is output towards a first 114a and a second 114b light sensitive element, respectively. Thus, the light exiting the polarization splitter 125 at the first 127a and second 127b distributing ends is incident onto the respective first 114a and second 114b light sensitive elements of the detector 110.

Each respective light sensitive element 114 is configured to generate an electric signal which is dependent on an intensity of the light incident onto the light sensitive element 114, thereby enabling detection of the light intensity incident onto the respective light sensitive elements 114. The detector 110 may be an image detector such as charge-coupled devices (CCD) and complementary metal oxide semiconductors (CMOS), however the detector 110 may alternatively be of another type.

The light sensitive elements 114a, 114b detecting light from the same light propagating unit 120 may be considered to form a sub-array of light sensitive elements 114. Thus, for each sub-array, the light sensitive elements 114a, 114b correspond to the light sensitive elements covered by the respective first 127a and second 127b distributing ends of the light propagating unit 120.

By the present arrangement each sub-array may detect the light from a point of an object being imaged, thereby each sub-array may be regarded as a picture element. The light intensity at each of the first 127a and second 127b distributing ends results from the polarization dependent propagation of light in the polarization splitter 125. Thus, the light sensitive elements 114a, 114b of a sub-array may jointly be able to distinguish between light of the two different polarization directions incident onto the corresponding light propagating unit 120, and may thereby be used to determine the polarization content of the incident light.

As illustrated in Fig. 1A, the first 114a and second 114b light sensitive elements of a sub-array may be arranged close to each other, such as adjacent to each other. However, it should be understood that the first 114a and second 114b light sensitive elements of a sub-array may alternatively be arranged to be spaced apart from each other.

It is conceivable that in case the first 114a and second 114b light sensitive elements are arranged close to each other, the risk of cross-talk between the two light signals to be detected by the two light sensitive elements 114a, 114b may be higher. On the other hand, in case the first 114a and second 114b light sensitive elements are arranged to be spaced apart from each other, the risk of cross-talk between the signals may be lower.

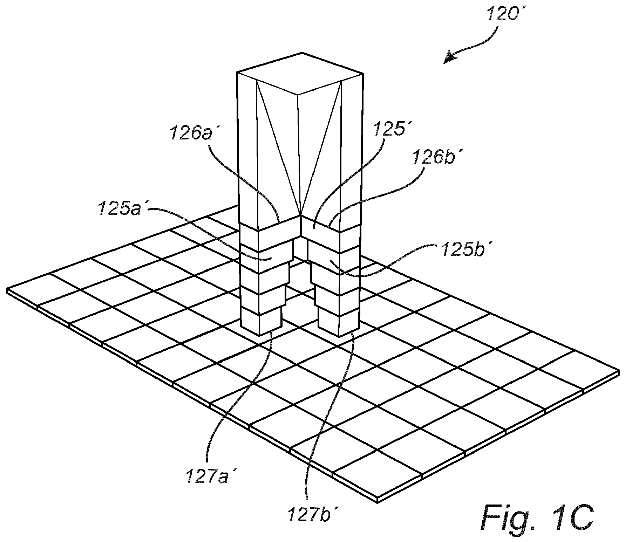

Fig. 1C schematically illustrates an alternative structure of the polarization splitter 125' of the light propagating unit 120'. The previously illustrated polarization splitter 125 had gradually, continuously tapered shape. However, the polarization splitter 125' may alternatively be tapered in steps such that the cross-section of the first and second waveguides 125a', 125b' step-wise transition from the larger cross-section of the first and second portions 126a', 126b', respectively, to the smaller cross-section of the first and second distributing ends 127a', 127b', respectively, along the direction of propagation of light in the respective waveguide 125a', 125b'. Such a structure may be manufactured by for example providing multiple layers, wherein the cross-section of each light propagating unit 120' is changes step by step for each new layer.

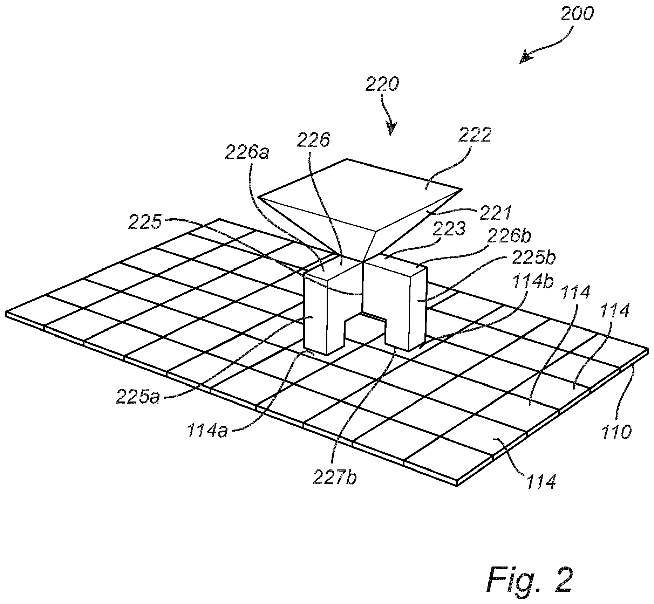

Fig. 2 schematically illustrates a device 200 for polarization dependent imaging. The device 200 comprises a plurality of light propagating units 220. Each respective light propagating unit 220 of the device 200 comprises a funnel element 221 and a polarization splitter 225. The device 200 shares some of the features with device 100 described in relation to Fig. 1A-1C, the details of which are not repeated here.

The funnel element 221 is configured to propagate the light from the collecting end 222 to the transmitting end 223. The funnel element 221 is tapered such that the cross-section of the collecting end 222 is larger than the cross-section of the transmitting end 223. As illustrated in Fig. 2, the funnel element 221 is structured such that the shape of the cross-section of the funnel element has the shape of a square at the collecting end 222, throughout the direction of propagation of the light to the transmitting end 223. Thus, the transmitting end 223 has the same geometrical shape as the collecting end 222, but with a smaller size. Further, the funnel element 221 illustrated in Fig. 2 is symmetrically tapered with respect to a central axis of the funnel element 221. The funnel element 221 may be configured to collect as much light as possible at the collecting end 222, and concentrated it into the transmitting end 223, and to couple the light into the polarization splitter 225.

Each respective polarization splitter 225 comprises a receiving end 226 facing the transmitting end 223 of the funnel element 221, and configured to receive light incident onto the receiving end 226. As illustrated in Fig. 2, the receiving end 226 comprises a first portion 226a and a second portion 226b, through which the light is coupled into the first waveguide 225a and the second waveguide 225b, respectively. The first portion 226a and the second portion 226b respectively has an elongated shape extending in a plane perpendicular to the direction of propagation of light. Further, the elongated shape of the first portion 226a and the elongated shape of the second portion 226b may be angled by 90° with respect to each other, such that the cross-section of the polarization splitter 225 at the receiving end 226 may be in the shape of an L. Thus, two perpendicular linear polarization directions of the light may be promoted to propagate through the first waveguide 225a and the second waveguide 225b, respectively.

In the present arrangement, the cross-section of the transmitting end 223 of the funnel element 221 has a different shape than the cross-section of the receiving end 226 of the polarization splitter 225. Thus, it is conceivable that the funnel element 221 may not contribute to the splitting of different linear polarization directions. However, the funnel element 221 may still provide efficient collection of light and concentrating and coupling the light into the polarization splitter.

The first waveguide 225a and the second waveguide 225b each extends from the receiving end 226, to a first distributing end 227a and a separate second distributing end 227b, respectively. The first waveguide 225a and the second waveguide 225b may have a step-wise tapered shape from the larger cross-sectional shape of the first 226a and second 226b portions to the smaller cross-sectional shape of the first 227a and second 227b distributing ends. The polarization splitter 225 is configured to propagate two different, perpendicular, linear polarization directions of the light from the receiving end 226 to the first and second distributing ends 227a, 227b, respectively.

Similar to the device 100 described in relation to Fig. 1A, the device 200 comprises a detector 110 comprising a plurality of light sensitive elements 114. Each light propagating unit 220 is arranged with respect to the detector 110 such that the light at the first distributing end 227a and the second distributing end 227b is output towards a first 114a and a second 114b light sensitive element, respectively. By the present arrangement, the two linear polarizations of the light exiting the polarization splitter 225 at the first 227a and second 227b distributing ends may be detected by the respective first 114a and second 114b light sensitive elements of the detector 110.

The light sensitive elements 114a, 114b detecting light from the same light propagating unit 220 may be considered to form a sub-array of light sensitive elements 114.

Due to the simple shape of the different parts of the light propagating units 220, such light propagating units 220 may be easy to manufacture, for example by successive epitaxial deposition and etching.

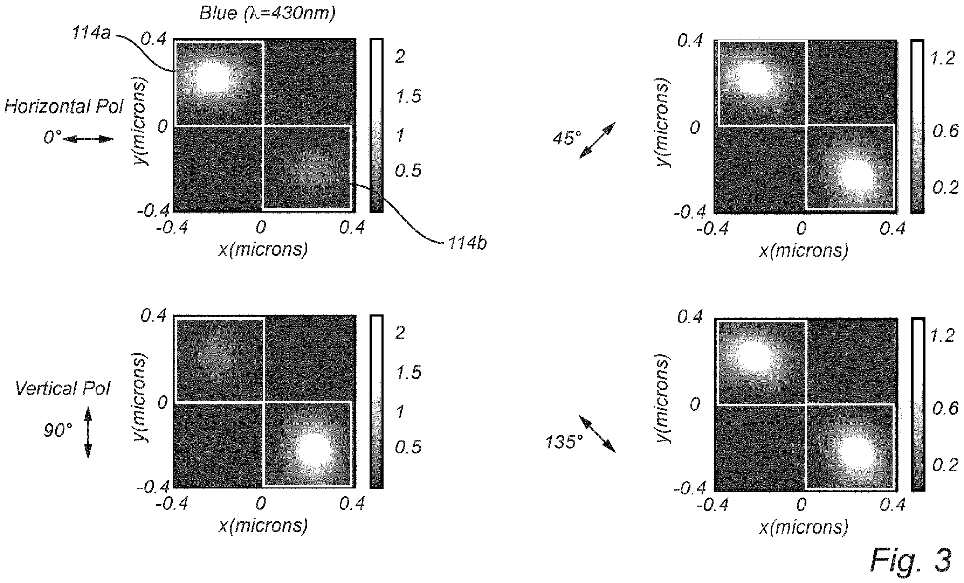

Fig. 3 illustrates a set of examples of light intensity distributions detected by a sub-array of light sensitive elements, for incident light with known polarization content. The result presented in Fig. 3 is derived from the device 100, however, it should be understood that the result may be equivalent from the device 200.

In the left column of Fig. 3, the light intensity is shown resulting from incident light being purely horizontally polarized (upper) and vertically polarized (lower), respectively. The horizontally polarized light results in a high light intensity at the first light sensitive element 114a of the sub-array, and essentially low and possibly no light intensity at the second light sensitive element 114b of the sub-array. Contrary, the vertically polarized light results in a high light intensity at the second light sensitive element 114b of the sub-array, and essentially low and possibly no light intensity at the first light sensitive element 114a of the sub-array. The result shows that the light propagating unit and the sub-array of device 100 may distinguish between horizontally and vertically polarized light.

In the right column of Fig. 3, the light intensity is shown resulting from incident light being purely linearly polarized, but with an angle of 45° or 135° with respect to the linearly polarized light in the left column of Fig. 3. Both the top and bottom diagrams show a light intensity evenly distributed to the first and second light sensitive elements 114a, 114b. This is a result of the incident light being split up into its horizontal and vertical components in the polarization splitter, and therefore results in the same light intensity distribution on the sub-array, regardless of whether the light has a 45° or 135° angle. The result shows that the light propagating unit and the sub-array of device 100 may not be able to distinguish between light of polarization directions having a 45° or 135° angle. Hence, if all light propagating units of the device are arranged with the same orientation with respect to the detector, the device may not be able to distinguish between all of the four mentioned light of polarization directions.

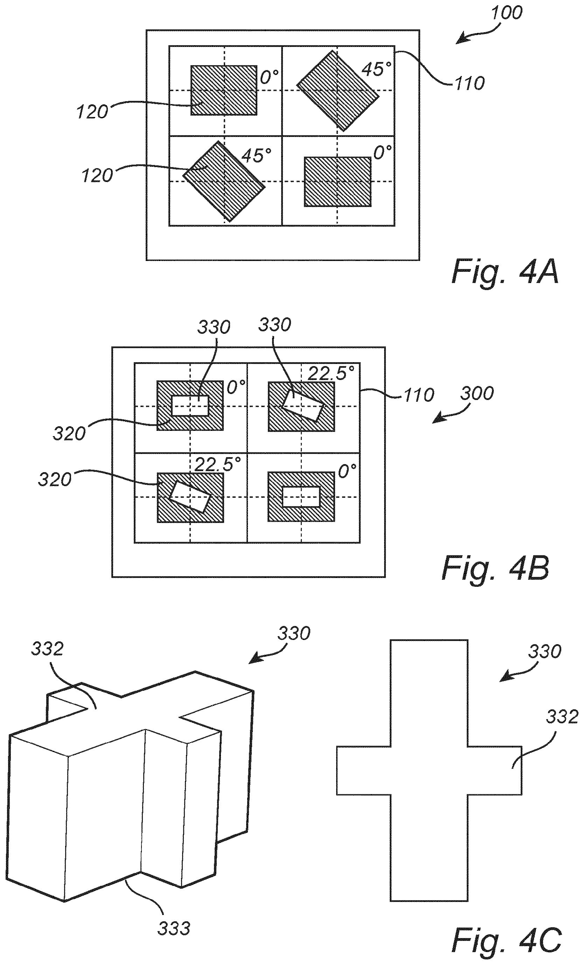

Fig. 4A schematically illustrates a top view of an alternative variation of the device 100 for polarization dependent imaging. However, it should be understood that the variation presented here is equally applicable to the device 200.

In the presented variation, some of the light propagating units 120 are arranged with an orientation of 45° in a plane parallel to the plane of the detector 110, with respect to an orientation of adjacent light propagating units 120. More specifically, the light propagating units 120 are arranged with alternating orientation of 0° and 45° with respect to an edge of the detector 110.

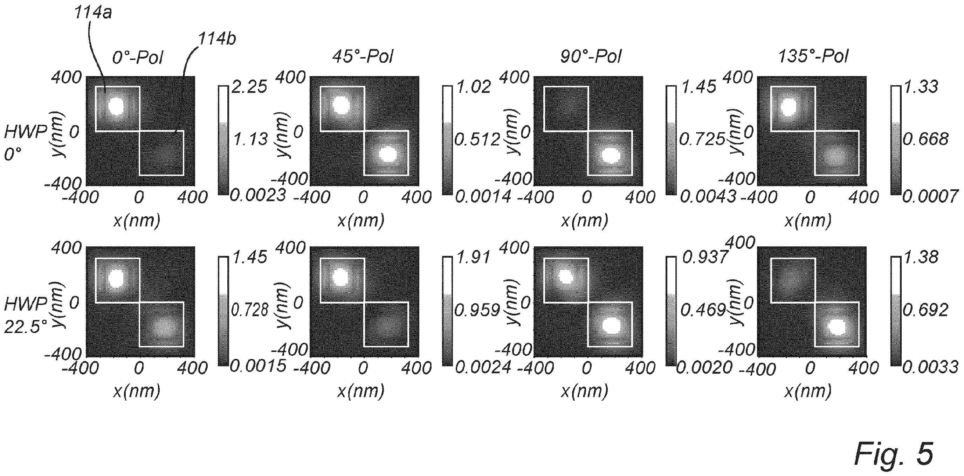

As discussed in relation to Fig. 3, the light propagating units 120 arranged with an orientation of 0° may be able to distinguish between horizontally and vertically polarized light, but may not be able to distinguish between light of polarization directions having a 45° or 135° angle. However, the light propagating units 120 arranged with an orientation of 45° may instead be able to distinguish between light of polarization directions having a 45° or 135° angle, but may not be able to distinguish between horizontally and vertically polarized light. Thus, a combination of at least two light propagating units 120, arranged with an orientation of 45° with respect to one another may be able to distinguish between all of the four mentioned light of polarization directions. This will be shown in more detail later, in relation to Fig. 5.

Fig. 4B schematically illustrates a top view of a device 300 for polarization dependent imaging. The device 300 comprises a plurality of light propagating units 320 and a detector 110. The device 300 shares some of the features with device 100 described in relation to Fig. 1A-1C, and device 200 described in relation to Fig. 2, the details of which are not repeated here.

The device 300 further comprises a plurality of half-wave plates 330, HWP, arranged at the receiving ends of the light propagating units 330. In case each light propagating unit 330 comprises also a funnel element, the HWP 330 may be arranged at the collecting end of the funnel element.

Each HWP 330 is configured to shift the phase of two perpendicular polarization directions of the incident light. As a result of the phase shift, the polarization direction of the light exiting the HWP 330 will be turned an angle of 2θ with respect to the incident polarization direction, where θ is the angle between the fast axis of the HWP 330 and the polarization direction of the incident light.

Some of the HWP 330 are arranged with an orientation of 22.5° in a plane parallel to the plane of the detector 110, with respect to an orientation of adjacent HWP 330. More specifically, the HWP 330 are arranged with alternating orientation of 0° and 22.5° with respect to an edge of the detector 110. Consequently, the difference between how much the polarization direction of incident light will be turned if passing a 0° HWP compared to a 22.5° HWP will be 2 x 22.5° = 45°. In other words, arranging the HWP 330 with alternating orientation of 0° and 22.5° may have a similar effect as arranging the light propagating units with alternating orientation of 0° and 45°, as described in relation to Fig. 4A. Thus, a combination of at least two light propagating units 320, with HWP 330 arranged with an orientation of 22.5° with respect to one another may be able to distinguish between all four light of polarization directions.

Fig. 4C schematically illustrates a perspective view and a top view of how a HWP 330 may be designed. By way of example, the HWP may have a top surface 332 being designed as a cross with two opposing long extensions and two other opposing shorter extensions perpendicular to the long extensions. Light may be incident onto the top surface 332. The light may propagate through the HWP 330 and exit the HWP 330 at the bottom surface 333. From the bottom surface 333, the light may be coupled into a receiving end of a polarization splitter, either directly or via a funnel element. Given as a non-limiting example, the HWP may be made of a high refractive index material such as TiO₂.

Fig. 5 illustrates a set of examples of light intensity distributions detected by a sub-array of light sensitive elements, for incident light with known polarization content, for the device 300 comprising alternatingly oriented HWP.

In the top row of Fig. 5, the light intensity is shown resulting from light of the polarization directions 0° (horizontal), 45°, 90° (vertical), and 135°, respectively, incident onto a light propagating unit with a HWP arranged at 0° orientation. As shown also in relation to Fig. 3, the horizontally and vertically polarized light result in a high light intensity at the first 114a and second 114b light sensitive element, respectively, and the two polarization directions may therefore be clearly distinguishable. On the other hand, light of the polarization directions 45° and 135° result in similar light intensities at the first 114a and second 114b light sensitive element, and are therefore not clearly distinguishable.

In the bottom row of Fig. 5, the light intensity is shown resulting from incident light of the polarization directions 0° (horizontal), 45°, 90° (vertical), and 135°, respectively, incident onto a light propagating unit with a HWP arranged at 22.5° orientation. The polarization direction of the light has turned 2 x 22.5° = 45°, compared to the original polarization direction of the incident light. Consequently, the resulting light intensity distributions are different from the previous situation. Light of the polarization direction 45° results in a high light intensity at the first light sensitive element 114a of the sub-array, and essentially low and possibly no light intensity at the second light sensitive element 114b of the sub-array. Contrary, light of the polarization direction 135° results in a high light intensity at the second light sensitive element 114b of the sub-array, and essentially low and possibly no light intensity at the first light sensitive element 114a of the sub-array. Thus, in the present arrangement, light of the polarization directions 45° and 135° may therefore be clearly distinguishable. Light of polarization directions 0° (horizontal) and 90° (vertical), however, result in similar light intensities at the first 114a and second 114b light sensitive element, and are therefore not clearly distinguishable.

Thus, a combination of at least two light propagating units, with HWP arranged with an orientation of 22.5° with respect to one another may be able to distinguish between all four light of polarization directions.

It serves to mention that, although not illustrated here, the resulting light intensity distributions may be at least similar and typically the same for a device without any HWP but with alternatingly oriented light propagation units.

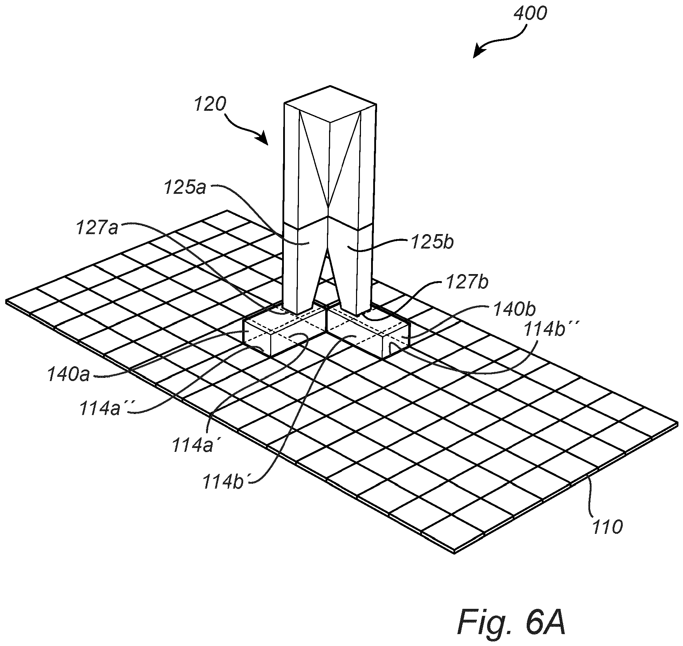

Fig. 6A schematically illustrates a device 400 for polarization dependent imaging. The device 400 comprises a plurality of light propagating units 120 arranged on a detector 110. Although the device 400 is here illustrated comprising the light propagating units 120, it should be understood that the device 400 may alternatively comprise for example the light propagating units 220. The device 400 shares some of the features with the devices 100, 200, 300 described in relation to preceding Figures, the details of which are not repeated here.

The device 400 further comprises, for each light propagating unit 120, a first color splitter 140a and a second color splitter 140b, arranged at the first 127a and second 127b distributing end, respectively. More specifically, for each light propagation unit 120, the first 140a and second 140b color splitters are arranged to have the waveguides 125a, 125b and the detector 110 opposite sides of the color splitter. The first 140a and second 140b color splitters are arranged such that the light being propagated through the first waveguide 125a and the second waveguide 125b and exiting at the first distributing end 127a and the second distributing end 127b is also propagated through the first 140a and second 140b color splitter, respectively.

Each color splitter 140a, 140b may extend across more than one light sensitive element 114 of the detector 110. As illustrated in Fig. 6A, the color splitters 140a, 140b extend across two light sensitive elements 114a', 114a", 114b', 114b", either along a row or a column of the light sensitive elements 114 of the detector 110.

Each color splitter 140a, 140b is configured to propagate light through the color splitter 140a, 140b in dependence of wavelength. By way of example, the color splitters 140a, 140b may be configured to split light in dependence of wavelength, such that longer wavelengths are guided towards one side of the color splitters 140a, 140b and shorter wavelengths are guided towards the other side of the color splitter 140a, 140b. By way of further example, the color splitters 140a, 140b may be configured to split light such that blue light is directed towards one of the two light sensitive elements 114a', 114b' across which the color splitters 140a, 140b extend, and such that red light is directed towards the other one of the two light sensitive elements 114a", 114b" across which the color splitters 140a, 140b extend. Since the light that reaches the respective color splitters 140a, 140b is already split based on polarization by the polarization splitter 120, the distribution of the light directed towards the light sensitive elements 114 is dependent on both polarization and wavelength of the light.

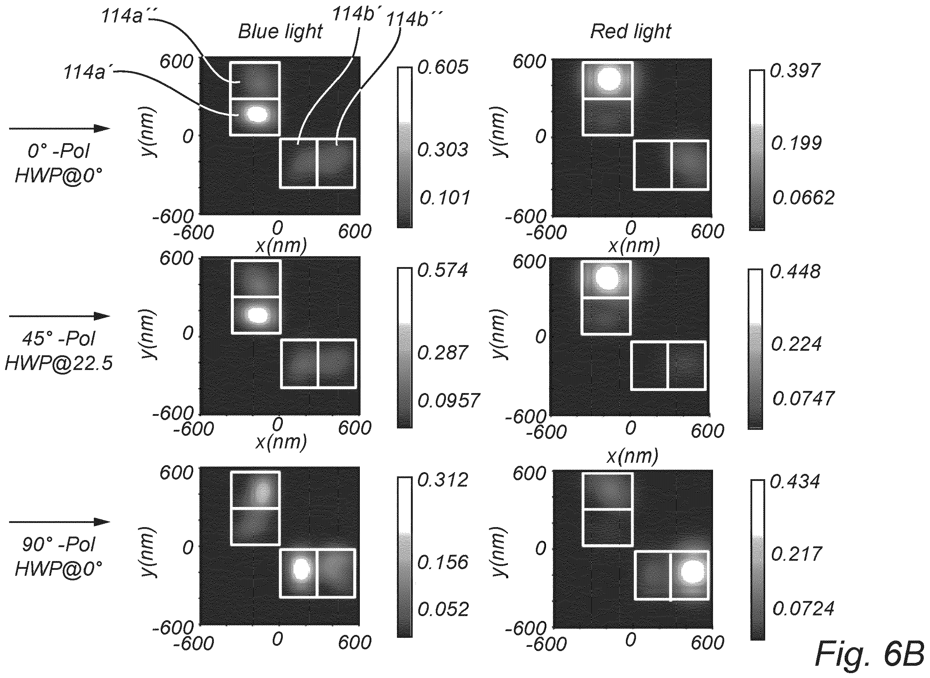

Fig. 6B illustrates a set of examples of light intensity distributions detected by a sub-array of light sensitive elements, for incident light with known polarization and wavelength content, for a device comprising a combination of color splitters and alternatingly oriented HWP.

In the top row of Fig. 6B, the light intensity is shown resulting from light of the polarization direction 0° (horizontal), incident onto a light propagating unit with a HWP arranged at 0° orientation. It is clearly seen how blue light (left column) is directed towards the light sensitive element 114a', whereas red light (right column) is directed towards the light sensitive element 114a". Thus, the two colors/wavelengths are clearly distinguishable.

In the bottom row of Fig. 6B, the light intensity is shown resulting from light of the polarization direction 90° (vertical), incident onto a light propagating unit with a HWP arranged at 0° orientation. Again, a clear separation of the colors/wavelengths is seen, however now the blue and red light is directed towards the light sensitive elements 114b' and 114b", respectively, as a result of the orthogonal polarization direction as compared to the top row of Fig. 6B.

In the middle row of Fig. 6B, the light intensity is shown resulting from light of the polarization direction 45° (diagonal), incident onto a light propagating unit with a HWP arranged at 22.5° orientation. Similar to the top row of the Figure, a clear distinction between color/wavelength and polarization may be made.

Hence, with a device for polarization dependent imaging comprising a combination of light propagating units with polarization splitters, HWP, and color splitters imaging that may distinguish between all linear polarizations as well as wavelengths, may be provided.

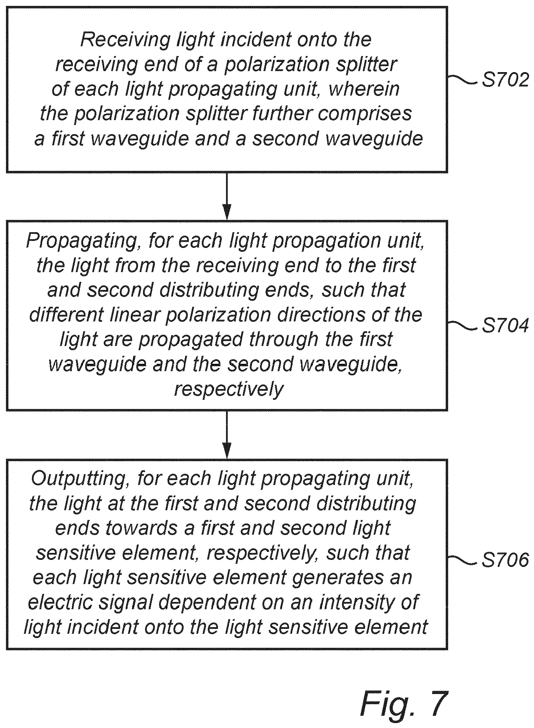

Fig. 7 illustrates a schematic block diagram shortly summarizing the method for polarization dependent imaging. It should be understood that the steps of the method, although listed in a specific order herein, may be performed in any order suitable.

The method may comprise receiving S702, at a receiving end of a polarization splitter of each light propagating unit of a plurality of light propagating units, light incident onto the receiving end. The polarization splitter may further comprise a first waveguide and a second waveguide, wherein the first waveguide comprises a first portion of the receiving end and the second waveguide comprises a second portion of the receiving end. The first waveguide may comprise a first distributing end and the second waveguide may comprise a second distributing end, the first distributing end and the second distributing end being separate from each other.

The method may comprise propagating S704, for each light propagation unit, the light from the receiving end to the first and second distributing ends. Each of the first portion and the second portion may have an elongated shape such that propagation of light into the first waveguide and the second waveguide, respectively, is dependent on a linear polarization direction of the light. The elongated shape of the first portion and the elongated shape of the second portion may be angled with respect to each other, such that propagating the light through the first waveguide and the second waveguide further comprises propagating different linear polarization directions of the light.

The method may comprise outputting S706, for each light propagating unit, the light at the first distributing end and the second distributing end towards a first and a second light sensitive element, respectively, of a plurality of light sensitive elements, such that each light sensitive element generates an electric signal dependent on an intensity of light incident onto the light sensitive element.

The method may further comprise collecting, by the plurality of light propagating units, light incident at a collecting end of a respective funnel element of each light propagating unit of the plurality of light propagating units.

The method may further comprise propagating, for each light propagation unit, the light to a transmitting end of the funnel element.

The method may further comprise transmitting the light from the transmitting end to the receiving end of the polarization splitter.

A cross-section of the collecting end may be larger than a cross-section of the transmitting end.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device for polarization dependent imaging, the device comprising:
a detector comprising a plurality of light sensitive elements, wherein each light sensitive element is configured to generate an electric signal dependent on an intensity of light incident onto the light sensitive element;
a plurality of light propagating units, wherein each light propagating unit of the plurality of light propagating units comprises:
a polarization splitter having a receiving end configured to receive light incident onto the receiving end, and wherein the polarization splitter further comprises a first waveguide and a second waveguide, wherein the first waveguide comprises a first portion of the receiving end and the second waveguide comprises a second portion of the receiving end, wherein the first waveguide comprises a first distributing end and the second waveguide comprises a second distributing end, the first distributing end and the second distributing end being separate from each other, and wherein the polarization splitter is configured to propagate the light from the receiving end to the first and second distributing ends, wherein each of the first portion and the second portion has an elongated shape such that propagation of light into the first waveguide and the second waveguide, respectively, is dependent on a linear polarization direction of the light, wherein the elongated shape of the first portion and the elongated shape of the second portion are angled with respect to each other, such that the first waveguide and the second waveguide are configured to propagate different linear polarization directions of the light;
wherein, for each light propagating unit, the light propagating unit is arranged with respect to the detector such that the light at the first distributing end and the second distributing end is output towards a first and a second light sensitive element, respectively, of the plurality of light sensitive elements.

2. The device according to claim 1, wherein each of the first waveguide and the second waveguide has a tapered shape, respectively, such that a cross-section of the first portion and the second portion is larger than a cross-section of the first distributing end and the second distributing end, respectively.

3. The device according to any one of claims 1 or 2, wherein the elongated shape of the first portion and the elongated shape of the second portion are angled by 90° with respect to each other.

4. The device according to claim 3, wherein a cross-section of the polarization splitter at the receiving end is in the shape of an L, such that the elongated shape of the first portion and the elongated shape of the second portion emanate from a common position and extend perpendicularly to each other.

5. The device according to any of the preceding claims, wherein each of the first portion and the second portion has an elongated shape in the shape of a rectangle.

6. The device according to any of the preceding claims, wherein each light propagating unit further comprises a funnel element having a collecting end and a transmitting end, wherein a cross-section of the collecting end is larger than a cross-section of the transmitting end, and wherein the funnel element is configured to collect light incident at the collecting end, to propagate the light to the transmitting end, and to transmit the light from the transmitting end to the receiving end of the polarization splitter.

7. The device according to claim 6, wherein the funnel element is further shaped so as to propagate the light in dependence of the linear polarization direction of the light, such that a spatial distribution of the light at different locations of the transmitting end is dependent on the linear polarization of the light.

8. The device according to any one of claims 6 or 7, wherein the funnel element is structured such that a shape of the cross-section of the collecting end is different from a shape of the cross-section of the transmitting end.

9. The device according to any one of claims 6 to 8, wherein the shape of the cross-section of the collecting end is in the shape of a square, and the shape of the cross-section of the transmitting end is in the shape of an L.

10. The device according to any one of claims 6 to 9, wherein the shape and a size of the cross-section of the transmitting end of the funnel element matches a shape and a size of the cross-section of the receiving end of the polarization splitter, and wherein the funnel element is arranged such that the cross-section of the transmitting end coincides with the cross-section of the receiving end.

11. The device according to any of the preceding claims, wherein the light sensitive elements are arranged in a planar fashion in a detector plane, and
wherein at least some of the light propagating units are arranged with an orientation in an interval of 40°-50° in a plane parallel to the detector plane, with respect to an orientation of adjacent light propagating units.

12. The device according to any one of claims 1 to 10, wherein the light sensitive elements are arranged in a planar fashion in a detector plane, and
wherein the device further comprises a plurality of half-wave plates, HWP, arranged at the receiving ends of the light propagating units, wherein each HWP of the plurality of HWP is configured to shift a phase of two perpendicular polarization directions of the light, and
wherein at least some of the HWP are arranged with an orientation in an interval of 20°-25° in a plane parallel to the detector plane, with respect to an orientation of adjacent HWP.

13. The device according to any of the preceding claims, wherein each light propagating unit further comprises at least one color splitter,
wherein the at least one color splitter is arranged such that the light being propagated through the first waveguide and/or the second waveguide is also propagated through the at least one color splitter, and
wherein each color splitter of the at least one color splitter is configured to propagate light through the color splitter in dependence of wavelength, such that a distribution of the light directed towards the light sensitive elements is dependent on polarization and wavelength of the light.

14. A method for polarization dependent imaging, the method comprising:
receiving, at a receiving end of a polarization splitter of each light propagating unit of a plurality of light propagating units, light incident onto the receiving end, wherein the polarization splitter further comprises a first waveguide and a second waveguide, wherein the first waveguide comprises a first portion of the receiving end and the second waveguide comprises a second portion of the receiving end, wherein the first waveguide comprises a first distributing end and the second waveguide comprises a second distributing end, the first distributing end and the second distributing end being separate from each other;
propagating, for each light propagation unit, the light from the receiving end to the first and second distributing ends, wherein each of the first portion and the second portion has an elongated shape such that propagation of light into the first waveguide and the second waveguide, respectively, is dependent on a linear polarization direction of the light, and wherein the elongated shape of the first portion and the elongated shape of the second portion are angled with respect to each other, such that propagating the light through the first waveguide and the second waveguide further comprises propagating different linear polarization directions of the light;
outputting, for each light propagating unit, the light at the first distributing end and the second distributing end towards a first and a second light sensitive element, respectively, of a plurality of light sensitive elements, such that each light sensitive element generates an electric signal dependent on an intensity of light incident onto the light sensitive element.

15. The method according to claim 14, further comprising:
collecting, by the plurality of light propagating units, light incident at a collecting end of a respective funnel element of each light propagating unit of the plurality of light propagating units;
propagating, for each light propagation unit, the light to a transmitting end of the funnel element; and
transmitting the light from the transmitting end to the receiving end of the polarization splitter;
wherein a cross-section of the collecting end is larger than a cross-section of the transmitting end.
